# EUROPEAN PATENT SPECIFICATION

(11) **EP 3 159 098 B1**
(45) Date of publication and mention of the grant of the patent: **02.01.2019**
(21) Application number: 16194865.8
(22) Date of filing: 20.10.2016
(51) Int. Cl.: B23K 35/26, B23K 35/00, B23K 35/28, B23K 35/30, B23K 35/02

(54) **BRAZING PROCESS OF PIPES AND COMPRESSOR**
LÖTVERFAHREN VON ROHREN UND VERDICHTER
PROCÉDÉ DE BRASAGE DE TUYAUX ET COMPRESSEUR

(30) Priority: 22.10.2015 BR 102015026864
(43) Date of publication of application: 26.04.2017
(73) Proprietor: Whirlpool S.A., 04578-000 São Paulo - SP (BR)
(72) Inventor: Alves de Oliveira, Moises, 89202-138 Joinville (BR)
(74) Representative: Soldatini, Andrea

(56) References cited:
- EP-A2- 0 705 960
- WO-A1-2014/021308
- GB-A- 637 945
- JP-A- 2010 038 087
- Tatsuya F.,Yuki W.,Yasuyuki M., Fumio K.: "Brazing of copper to stainless steel with a low-silver-content brazing filler material", International Symposium on Interfacial Joining and Surface Technology (IJST2013) , vol. 61 1 January 2014 (2014-01-01), XP002766867, Retrieved from the Internet: URL:http://iopscience.iop.org/article/10.1 088/1757-899X/61/1/012016/pdf [retrieved on 2017-02-08]
- Anonymous: "Brazing Technique for Compressor Connectors PRODUCT BULLETIN", Secop , 1 February 2015 (2015-02-01), pages 1-2, XP055343497, Retrieved from the Internet: URL:http://www.secop.com/fileadmin/user_da ta/pdfs/product_bulletins/brazing_techniqu e_compressor_connectors_02-2015_desn600a10 2.pdf [retrieved on 2017-02-08]
- Lucas Milhaupt: "AL 802 Technical Data Sheet", , 1 April 2014 (2014-04-01), XP002766539, Retrieved from the Internet: URL:http://www.silfos.com/assets/product_s upport/technical_data_documents/Handy-One- AL-802.pdf [retrieved on 2017-01-30]
- MuggyWeld: "Brazing Copper to Stainless Steel (using Ag solder)", , 30 January 2014 (2014-01-30), XP002766868, Retrieved from the Internet: URL:https://www.youtube.com/watch?v=suvkKu EURww

## Description

### Field of the Invention

The present invention describes a brazing process for joining parts of equipment, more specifically brazing of an exhaust pipe of a compressor and a compressor comprising a brazed exhaust system. The present invention lies in the fields of compressor industry, metallurgy, mechanical engineering and materials engineering.

### Background of the Invention

Brazing is a process that uses the filler of a heated metal to or beyond its melting point, and characterized in that the filler of the molten metal being different of base metals, and may be a pure metal or a metallic specific alloy. As the melting point of the filler materials is generally low, the brazing can be made using fuel gas mixtures of atmospheric air and low heat transfer. These devices are known as air-gas type and are usually used in service in pipes and refrigeration equipment. Brazing uses a filler rod that generally melts at temperatures above 450 °C and may vary with the alloy. The base metals to be joined can be of different natures. The brazing process can use air-fuel flame or oxyfuel, and heating by induction.

While the oxy-acetylene flame is always necessary for the welding flame (melting material), the brazing can be performed by other combustible gases such as propane, natural gas, propylene, etc. This is because the brazing process, there is the filler of a flux function with pre-cleaning and deoxidation similar to the oxy-acetylene flame.

Brazing differs from the oxywelding in melting temperature of metal added and the base material to be joined, and occurs at temperatures below the melting point of the base metal, but at temperatures at or above the melting point of the filler material to fill the joints to which they are intended.

The particularity of the process is in the capillarity action resultant from the interaction of the material to be added, from the joint or parts to be joined dimensions, the base material and the brazing temperature. The steel parts or other material to be welded do not need to be melt for being joint satisfactorily. The use of brazing allows mechanical fixing, liquid and gases sealing, and in many cases, pipes joint and geometrically compatible parts.

The advantages presented in can be brazed processes: the use of lower temperatures cause lower warpage of the part; or unwanted change of the base material microstructure. Base materials of different natures (ferrous and nonferrous) can be brazed and steel parts to be brazed not need to be merged to promote unity.

Currently in some applications in which brazing is used, it is common use to use silver or silver alloy as filler material, which ensures good strength, compatibility and finish to certain groups of base materials. However, the use of silver or alloys thereof, becomes a process of high cost due to the market price of silver itself, which is historically a noble and valued metal.

Routinely, the brazing process with silver alloys has been practiced by the fact that ensures good adhesion and compatibility in joining application of steel and copper, as well as promoting durable mechanical joint, prevents the leading cause of leaks in sealed systems (for example, compressors): porosity. Another major beneficial factor in the use of silver alloy is the fact that it can be free of cadmium, and thus understand systems that are in constant contact with humans. The current industry does not have enough knowledge to replace the silver and its alloys in a satisfactory manner, that is, to prepare a union process of copper tubes in steel parts that is efficient, and physically and chemically feasible.

Thus, what is clear from the literature, no documents were found suggesting or anticipating the teachings of the present invention, so that the solution proposed here has novelty and inventive activity against the state of the art.

### Prior Art

WO 2014/021308 A1 is considered to be the closest prior art and describes a brazing alloy, that is Zn/AI based and of which the Al content is between 1-5%. It further discloses that this brazing alloy is suitable for not only the joining of aluminum members but also bonding of aluminum with a metal such as stainless steel, nickel, copper, titanium or the like or an alloy such as brass is possible, and various soldering, not limited to aluminum, and it can be used for brazing applications.

### Summary of the Invention

Thus, the present invention aims to solve the listed problems in state of the art from the use of an alloy of zinc and aluminum which when heated and placed under specific conditions, replace the silver and their alloys as material added in brazing processes. The final mechanical characteristics obtained are similar to those generated from the brazing using silver and its alloys, but the costs are significantly reduced.

In a first embodiment, the present invention provides a brazing process of copper pipe on steel parts from an alloy composed mainly of zinc.

In a second embodiment of the present invention, a compressor comprising copper exhaust pipe is fixed to a steel structure via specific brazing process with alloys composed mainly of zinc.

From the specific heating with temperature, atmosphere and heating time controlled, the connection between the exhaust pipe of a compressor and the exhaust system can be promoted through the brazing process exemplified by the present invention.

Brazing of the present invention comprises adding a zinc-aluminum alloy so that the process is carried out at lower temperatures, which minimizes the size of the area affected by the heat from the base materials, besides reducing the consumption of energy required for heating, thereby reducing the cost of the material involved.

These and other objects of the invention will be immediately appreciated by those versed in the art and by companies with interests in the sector, and will be described in sufficient detail to reproduce in the description below.

### Brief Description of the Drawings

In order to better define and clarify the content of the present application, the following figure appears:

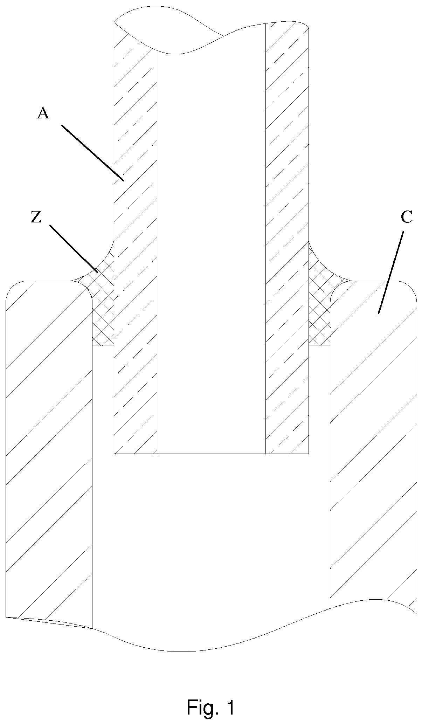

Figure 1 shows a copper tube (C) added/attached to a metal part of steel (A) after being subjected to brazing with a zinc alloy (Z).

### Detailed Description of the Invention

The descriptions that follow are presented by way of example and not limiting the scope of the invention and will understand more clearly the object of the present application.

The present invention has the objective to present a solution for the production of compressors, in particular by a brazing process that replaces the conventional use of silver and their alloys, for an alloy mainly composed of zinc as filler material for hermetic connection pieces made of different metals.

The capillary or capillary action is the ability of a liquid metal has to fill spaces between the components to braze. In the brazing process it is not necessary to work the profile parts, because these do not fuse. What will join the pieces is the filler of metal. This cast do penetrate the spaces between the parts to braze.

The brazing with silver alloys presents a better capillarity than zinc alloy, which can be related to the temperature (high to silver alloys) and different properties of the two filler materials, such as: density, thermal conductivity, surface tension, among others. This implies that the filler of metal composed of zinc may have lower penetration rates.

However, for the proposed application in the present invention, the smallest capillarity of zinc alloys is still sufficient to fulfill the mechanical strength requirements, and which is offset by reduced costs with the acquisition of material.

The present invention contemplates the use of a zinc and aluminum alloy as filler material for a brazing process carried out at low temperatures at which the fusion of the filler material can be controlled, which minimizes the size of the affected area heat between the base material and reduce the energy consumption required for heating, thereby reducing the cost of the material involved.

### Example 1. Preferred Realization

In a first object the present invention provides a copper pipe brazing process of steel parts from an alloy mainly comprising zinc, or the alloy used as the filler material consists of 98% of zinc and 2% aluminum.

### Example 2. Preferred Realization

In a second object of the present invention, a compressor comprising copper discharge pipe is fixed to a steel structure, the type Bundy tube, through the specific brazing process with alloys composed mainly of zinc.

Those skilled in the art will value the knowledge presented herein, and may play the invention shown in the embodiments, and other embodiments which fall within the scope of the appended claims.

## Claims

1. Brazing process of pipes wherein a first pipe is composed of copper and a second pipe is composed of steel, the process **characterized by** comprising:
- applying, between said first and second pipes, a brazing alloy composed by Zinc/Aluminum, comprising between 95%-99% of Zinc and 5%-1% of Aluminum; and
- application of controlled means of melting and cooling of the first set and second tubes and braze alloy with specific heating temperature, atmosphere and heating time.

2. Process, according to claim 1, **characterized by** the fact that the brazing alloy comprises 98% of Zinc and 2% of Aluminum.

3. Compressor comprising exhaust system composed by a first pipe composed of copper and a second pipe composed by steel, **characterized by** being brazed by a process as defined in claim 1 or 2.

## Patentansprüche

1. Lötverfahren von Rohren, wobei ein erstes Rohr aus Kupfer besteht und ein zweites Rohr aus Stahl besteht, wobei das Verfahren **dadurch gekennzeichnet ist, dass** es enthält:
- Aufbringen eine Hartlot, das aus Zink/Aluminium besteht, was zwischen 95 % - 99 % Zink und 5 % - 1 % Aluminium enthält, zwischen den ersten und zweiten Rohren; und
- Anwenden von gesteuerten Mitteln zum Schmelzen und Kühlen der ersten festen und zweiten Rohre und des Hartlotes mit einer spezifischen Heiztemperatur, Atmosphäre und Heizzeit.

2. Verfahren nach Anspruch 1, **gekennzeichnet durch** die Tatsache, dass das Hartlot 98 % Zink und 2 % Aluminium enthält.

3. Kompressor, der eine Abgasanlage enthält, die aus einem ersten Rohr, das aus Kupfer besteht, und einem zweiten Rohr besteht, das durch Stahl aufgebaut ist, **dadurch gekennzeichnet, dass** sie durch ein Verfahren verlötet sind, wie es in dem Anspruch 1 oder 2 definiert ist.

## Revendications

1. Procédé de brasage de tuyaux dans lequel un premier tuyau est composé de cuivre et un second tuyau est composé d'acier, le procédé étant **caractérisé par** les étapes consistant à :
- appliquer, entre lesdits premier et second tuyaux, un alliage de brasure composé de Zinc/Aluminium, comprenant entre 95%-99% de Zinc et 5%-1% d'Aluminium ; et
- appliquer des moyens commandés de fusion et de refroidissement des premier et second tuyaux et de l'alliage de brasure sous température de chauffage, atmosphère et temps de chauffage spécifiques.

2. Procédé selon la revendication 1, **caractérisé par le fait que** l'alliage de brasure comprend 98% de Zinc et 2% d'Aluminium.

3. Compresseur comprenant un système d'échappement composé d'un premier tuyau en cuivre et d'un second tuyau en acier, **caractérisé en ce qu'**il est brasé selon un procédé comme défini dans l'une des revendications 1 et 2.
